# EUROPEAN PATENT APPLICATION

(11) **EP 4 132 221 A1**
(43) Date of publication of application: **08.02.2023**
(21) Application number: 21780847.6
(22) Date of filing: 19.03.2021
(51) Int. Cl.: H05B 6/06, H05B 6/12

(54) **INDUCTION HEATING TYPE COOKTOP**

(30) Priority: 01.04.2020 KR 20200039830
(71) Applicant: LG Electronics, Inc., Yeongdeungpo-gu Seoul 07336 (KR)
(72) Inventor: KWACK, Younghwan, Seoul 08592 (KR); SON, Seongho, Seoul 08592 (KR); JEON, Seonho, Seoul 08592 (KR); CHO, Chuhyoung, Seoul 08592 (KR); JI, Jongseong, Seoul 08592 (KR)
(74) Representative: Vossius & Partner Patentanwälte Rechtsanwälte mbB
(86) International application number: PCT/KR2021/003457
(87) International publication number: WO 2021/201477

(57) **Abstract**

An induction heating type cooktop according to an embodiment of the present disclosure includes: a case; a cover plate configured to be coupled to an upper end of the case and provided with an upper plate portion on which an object to be heated is disposed; a thin film configured to be coated on the upper plate portion and having an opening in a center thereof; a working coil provided inside the case and including a first working coil and a second working coil; and at least one inverter configured to be driven to allow electric currents to flow through the first working coil and the second working coil, wherein a direction of the electric current flowing through the first working coil is the same as or different from a direction of the electric current flowing through the second working coil according to the object to be heated.

## Description

### [TECHNICAL FIELD]

The present disclosure relates to an induction heating type cooktop. More particularly, the present disclosure relates to an induction heating type cooktop coated with a thin film.

### [BACKGROUND ART]

Various types of cooking equipments are used to heat food at home or in a restaurant. Conventionally, gas stoves using gas as fuel have been widely used, but recently devices for heating an object to be heated, for example, cooking vessels such as pots, have been spread using electricity instead of gas.

A method of heating an object to be heated using electricity is largely divided into a resistance heating method and an induction heating method. The electric resistance method is a method of heating an object to be heated by transferring heat generated when an electric current flows through a metal resistance wire or a non-metallic heating element such as silicon carbide to the object to be heated (for example, a cooking vessel) through radiation or conduction. In addition, when high-frequency power of a predetermined magnitude is applied to the coil, the induction heating method generates an eddy current in the object to be heated consisting of a metal component using a magnetic field generated around the coil to heat the object to be heated itself.

Recently, most of the induction heating methods are applied to cooktops.

However, in a case of a cooktop to which an induction heating method is applied, there is a limitation in that only a magnetic material can be heated. In other words, when a nonmagnetic material (for example, heat-resistant glass, pottery, or the like) is disposed on the cooktop, there is a problem that the cooktop to which the induction heating method is applied cannot heat the object to be heated.

In order to improve the problem of such an induction heating type cooktop, the present disclosure intends to use a thin film. Specifically, the cooktop according to the present disclosure may include a thin film to which an eddy current is applied so that the nonmagnetic material is heated. In addition, the thin film may be formed to have a skin depth thicker than the thickness, and accordingly, the magnetic field generated in the working coil may pass through the thin film and heat the magnetic material by applying an eddy current to the magnetic material.

Meanwhile, the induction heating type cooktop may be driven by a dual coil (for example, a combination of an inner coil and an outer coil) method. In a conventional dual coil driving method, an inverter for driving an inner coil and an inverter for driving an outer coil are separately provided to determine the output of a dual coil.

At this time, signals of the separate inverters for driving each coil have to be completely synchronized so as to control the cooktop so that the output does not shake. Accordingly, in a conventional working coil driving method, a circuit for synchronizing an inverter signal has to be additionally configured so as to control an output, and accordingly, the circuit configuration is complicated.

In addition, in the conventional dual coil driving method, it is essential to drive the outer coil when high output is required. Therefore, there is a problem that the size of the object to be heated has to be sufficiently larger than the outer coil in order to produce high output.

### [DISCLOSURE OF INVENTION]

### [TECHNICAL PROBLEM]

An object of the present disclosure is to minimize the problem of a decrease in heating efficiency for each of a magnetic material and a nonmagnetic material in an induction heating type cooktop capable of heating both the magnetic material and the nonmagnetic material.

An object of the present disclosure is to provide an apparatus capable of increasing heating efficiency for each of a magnetic material and a nonmagnetic material without sensing a type of an object to be heated in an induction heating type cooktop capable of heating both the magnetic material and the nonmagnetic material.

### [TECHNICAL SOLUTION]

An induction heating type cooktop according to an embodiment of the present disclosure may change a magnetic field concentration region by controlling the directions of electric currents flowing through a plurality of working coils driven by one inverter.

In the induction heating type cooktop according to an embodiment of the present disclosure, when the directions of electric currents flowing through the plurality of working coils are controlled to be different from each other, the magnetic field strength of the central region of the plurality of working coils may be formed to be stronger than the magnetic field strength of the outer region.

In the induction heating type cooktop according to an embodiment of the present disclosure, when the directions of electric currents flowing through the plurality of working coils are controlled to be the same as each other, the magnetic field strength of the central region of the plurality of working coils may be formed to be weaker than the magnetic field strength of the outer region.

The induction heating type cooktop according to an embodiment of the present disclosure may further include a controller configured to compare target power with output power and control the directions of electric currents flowing through the plurality of working coils.

### [ADVANTAGEOUS EFFECTS]

According to the present disclosure, it is possible to concentrate a magnetic field into a thin film or a magnetic container by changing a magnetic field concentration region, thereby minimizing a decrease in heating efficiency for each of a magnetic material and a nonmagnetic material and increasing heating performance.

According to the present disclosure, since heating efficiency can be increased without a separate sensor for detecting whether an object to be heated is a magnetic material or a nonmagnetic material, there is an advantage in that the manufacturing cost can be reduced and the structure can be simplified.

### [BRIEF DESCRIPTION OF DRAWINGS]

FIG. 1 is a view for explaining an induction heating type cooktop according to an embodiment of the present disclosure.
FIG. 2 is a cross-sectional view illustrating an induction heating type cooktop and an object to be heated according to an embodiment of the present disclosure.
FIG. 3 is a cross-sectional view illustrating an induction heating type cooktop and an object to be heated according to another embodiment of the present disclosure.
FIGS. 4 and 5 are diagrams for explaining a relationship between a thickness of a thin film and a skin depth.
FIGS. 6 and 7 are diagrams for explaining a change in impedance between a thin film and an object to be heated according to the type of object to be heated.
FIGS. 8 and 9 are diagrams for explaining an induction heating type cooktop according to an embodiment of the present disclosure.
FIG. 10A is an exemplary diagram illustrating directions of electric currents flowing through a first working coil and a second working coil in a cooktop according to an embodiment of the present disclosure.
FIG. 10B is an exemplary diagram illustrating a magnetic field distribution around a working coil when an electric current flows through the working coil as illustrated in FIG. 10A.
FIG. 10C is an exemplary diagram illustrating a coupling state of a magnetic field when an electric current flows through a working coil as illustrated in FIG. 10A.
FIG. 10D is an exemplary diagram illustrating a thin film when a magnetic field concentration region is an outer region of a working coil.
FIG. 11A is an exemplary diagram illustrating directions of electric currents flowing through a first working coil and a second working coil in a cooktop according to an embodiment of the present disclosure.
FIG. 11B is an exemplary diagram illustrating a magnetic field distribution around a working coil when an electric current flows through the working coil as illustrated in FIG. 11A.
FIG. 11C is an exemplary diagram illustrating a coupling state of a magnetic field when an electric current flows through a working coil as illustrated in FIG. 11A.
FIG. 12 is a control block diagram illustrating a configuration of an induction heating type cooktop according to an embodiment of the present disclosure.
FIG. 13 is a circuit diagram of an induction heating type cooktop according to a first embodiment of the present disclosure.
FIG. 14 is a circuit diagram of an induction heating type cooktop according to a second embodiment of the present disclosure.
FIG. 15 is a circuit diagram of an induction heating type cooktop according to a third embodiment of the present disclosure.
FIG. 16 is a flowchart illustrating an operating method of an induction heating type cooktop when a magnetic material is a priority according to an embodiment of the present disclosure.
FIG. 17 is a flowchart illustrating an operating method of an induction heating type cooktop when a nonmagnetic material is a priority according to an embodiment of the present disclosure.

### [BEST MODE FOR CARRYING OUT THE INVENTION]

Hereinafter, preferred embodiments according to the present disclosure will be described in detail with reference to the accompanying drawings. In the drawings, the same reference numerals are used to refer to the same or similar components.

Hereinafter, an induction heating type cooktop according to an embodiment of the present disclosure will be described.

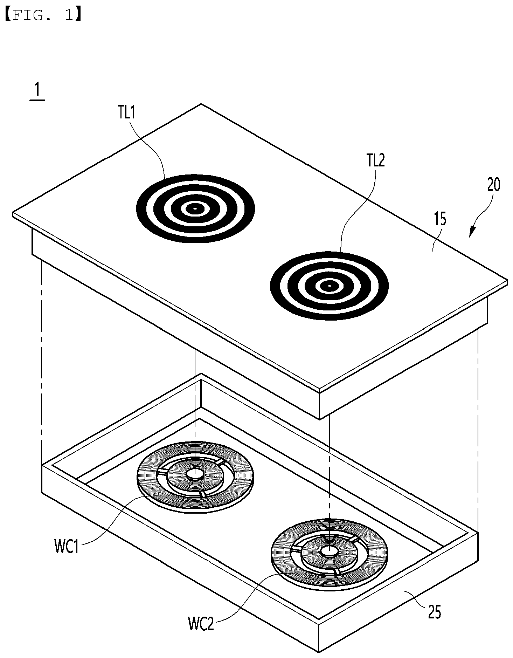

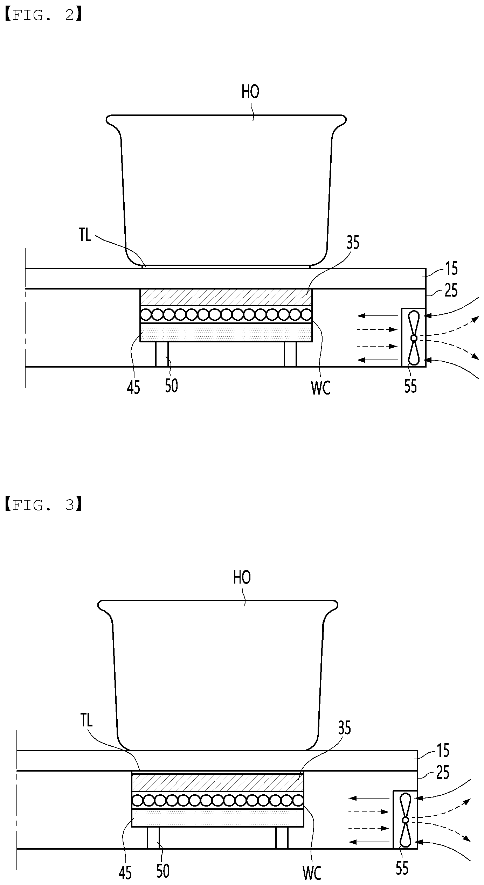

FIG. 1 is a view for explaining an induction heating type cooktop according to an embodiment of the present disclosure, FIG. 2 is a cross-sectional view illustrating an induction heating type cooktop and an object to be heated according to an embodiment of the present disclosure, and FIG. 3 is a cross-sectional view illustrating an induction heating type cooktop and an object to be heated according to another embodiment of the present disclosure.

First, referring to FIG. 1, an induction heating type cooktop 1 according to an embodiment of the present disclosure may include a case 25, a cover plate 20, and working coils WC1 and WC2 (that is, the first and second working coils) and thin films TL1 and TL2 (that is, first and second thin films).

Working coils WC1 and WC2 may be installed in the case 25.

For reference, in the case 25, in addition to the working coils WC1 and WC2, various devices related to the driving of the working coil (for example, a power supply providing AC power, a rectifying portion for rectifying the AC power of the power supply into DC power, an inverter portion that converts DC power rectified by the rectifying portion into a resonance current through a switching operation to provide the resonance current to the working coil, a control module that controls the operation of various devices in the induction heating type cooktop 1, and a relay or semiconductor switch that turns the working coil on or off, and the like) may be installed, but a detailed description thereof will be omitted.

The cover plate 20 is coupled to the upper end of the case 25, and an upper plate portion 15 on which an object to be heated (not illustrated) is disposed may be provided on the upper surface.

Specifically, the cover plate 20 may include an upper plate portion 15 for placing an object to be heated, such as a cooking vessel.

Here, the upper plate portion 15 may be made of, for example, a glass material (for example, ceramics glass).

In addition, the upper plate portion 15 may be provided with an input interface (not illustrated) that receives an input from a user and transmits the input to a control module (not illustrated) for an input interface. Of course, the input interface may be provided at a location other than the upper plate portion 15.

For reference, the input interface is a module for inputting a desired heating intensity or operating time of the induction heating type cooktop 1 and may be variously implemented as a physical button or a touch panel. In addition, the input interface may include, for example, a power button, a lock button, a power level adjustment button (+, -), a timer adjustment button (+, -), a charging mode button, and the like. In addition, the input interface may transmit the input received from the user to the control module for the input interface (not illustrated), and the control module for the input interface may transmit the input to the aforementioned control module (that is, the control module for the inverter). In addition, the above-described control module can control the operation of various devices (for example, a working coil) based on an input (that is, a user input) received from the control module for the input interface, and specific details thereof will be omitted.

Meanwhile, on the upper plate portion 15, whether the working coils WC1 and WC2 are driven and the heating intensity (that is, thermal power) may be visually displayed in the shape of a crater. The shape of the crater may be indicated by an indicator (not illustrated) composed of a plurality of light emitting devices (for example, LEDs) provided in the case 25.

The working coils WC1 and WC2 may be installed inside the case 25 to heat the object to be heated.

Specifically, the working coil WC may be controlled to be driven by the aforementioned control module (not illustrated), and when the object to be heated is disposed on the upper plate portion 15, the working coil WC may be driven by the control module.

In addition, the working coil WC can directly heat a magnetic object to be heated (that is, a magnetic material), and can indirectly heat a nonmagnetic object to be heated through a thin film TL, which will be described later.

In addition, the working coil WC may heat an object to be heated by an induction heating method and may be provided to overlap the thin film TL in a longitudinal direction (that is, a vertical direction or an up and down direction).

For reference, although it is illustrated in FIG. 1 that two working coils WC1 and WC2 are installed in the case 25, the present disclosure is not limited thereto. In other words, one or three or more working coils may be installed in the case 25, but for convenience of explanation, the embodiment of the present disclosure will describe with an example in which two working coils WC1 and WC2 are installed in the case 25.

The thin film TL may be coated on the upper plate portion 15 to heat a nonmagnetic material among the objects to be heated. The thin film TL may be inductively heated by the working coil WC.

The thin film TL may be coated on the upper surface or the lower surface of the upper plate portion 15. For example, as illustrated in FIG. 2, the thin film TL may be coated on the upper surface of the upper plate portion 15, or as illustrated in FIG. 3, the thin film TL may be coated on the lower surface of the upper plate portion 15.

The thin film TL may be provided to overlap the working coil WC in a longitudinal direction (that is, a vertical direction or an up and down direction). Accordingly, it is possible to heat the object to be heated regardless of the disposition position and type of the object to be heated.

In addition, the thin film TL may have at least one of magnetic and nonmagnetic properties (that is, magnetic, nonmagnetic, or both magnetic and nonmagnetic).

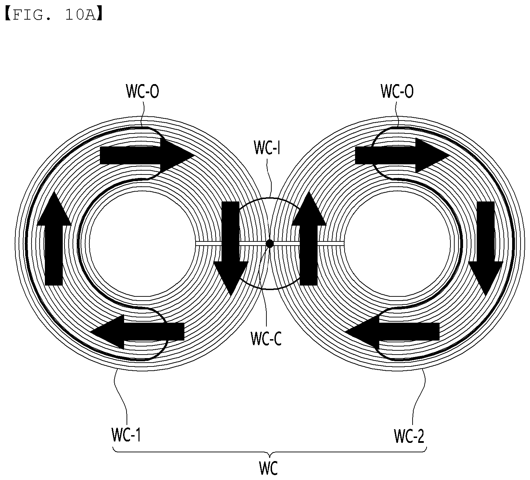

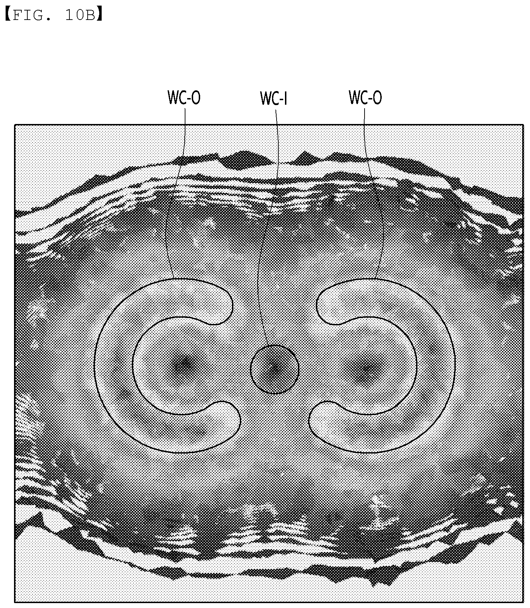

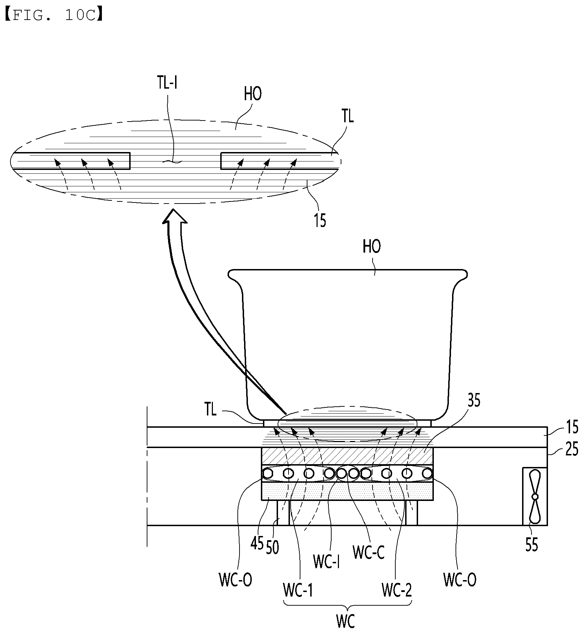

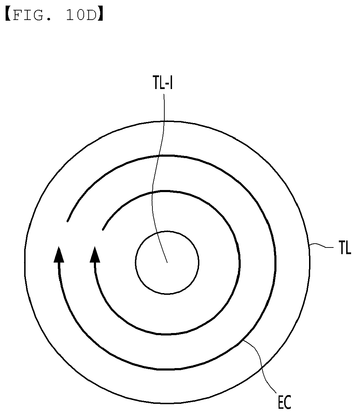

In addition, the thin film TL may be made of, for example, a conductive material (for example, aluminum), and as illustrated in the drawing, a plurality of rings of different diameters may be coated on the upper plate portion 15 in a repeating shape, but is not limited thereto. In other words, the thin film TL may be made of a material other than the conductive material. In addition, the thin film TL may be formed in a shape other than a shape in which a plurality of rings having different diameters are repeated. Various shapes of the thin film TL will be described in more detail with reference to FIGS. 10 to 15.

For reference, although one thin film TL is illustrated in FIGS. 2 and 3, the present disclosure is not limited thereto. In other words, a plurality of thin films may be coated, but for convenience of description, a case where one thin film TL is coated will be described as an example.

A more detailed description of the thin film TL will be described later.

Next, referring to FIGS. 2 and 3, the induction heating type cooktop 1 according to an embodiment of the present disclosure may further include at least some or all of an adiabatic material 35, a shielding plate 45, a support member 50, and a cooling fan 55.

The adiabatic material 35 may be provided between the upper plate portion 15 and the working coil WC.

Specifically, the adiabatic material 35 may be mounted under the upper plate portion 15, and a working coil WC may be disposed under the adiabatic material.

The adiabatic material 35 may block the transfer of heat generated to the working coil WC while the thin film TL or the object to be heated HO is heated by the driving of the working coil WC.

In other words, when the thin film TL or the object to be heated HO is heated by electromagnetic induction of the working coil WC, the heat of the thin film TL or the object to be heated HO is transferred to the upper plate portion 15, and the heat of the upper plate portion 15 is transferred back to the working coil WC, and thus the working coil WC may be damaged.

The adiabatic material 35 blocks the heat transferred to the working coil WC in this way, thereby preventing the working coil WC from being damaged by heat, and furthermore, preventing the decrease in the heating performance of the working coil WC.

For reference, although it is not an essential component, a spacer (not illustrated) may be installed between the working coil WC and the adiabatic material 35.

Specifically, a spacer (not illustrated) may be inserted between the working coil WC and the adiabatic material 35 so that the working coil WC and the adiabatic material 35 do not directly contact each other. Accordingly, the spacer (not illustrated) may block the transfer of heat generated while the thin film TL or the object to be heated HO is heated by the driving of the working coil WC to the working coil WC through the adiabatic material 35.

In other words, the spacer (not illustrated) can share a part of the role of the adiabatic material 35, and thus the thickness of the adiabatic material 35 can be minimized, and through this, the spacing between the object to be heated HO and the working coil WC can be minimized.

In addition, a plurality of spacers (not illustrated) may be provided, and the plurality of spacers may be disposed to be spaced apart from each other between the working coil WC and the adiabatic material 35. Accordingly, the air suctioned into the case 25 by the cooling fan 55 to be described later may be guided to the working coil WC by the spacer.

In other words, the spacer may improve the cooling efficiency of the working coil WC by guiding the air flowing into the case 25 by the cooling fan 55 to be properly transmitted to the working coil WC.

The shielding plate 45 may be mounted on the lower surface of the working coil WC to block a magnetic field generated downward when the working coil WC is driven.

Specifically, the shielding plate 45 may block a magnetic field generated downward when the working coil WC is driven and may be supported upward by the support member 50.

The support member 50 may be installed between the lower surface of the shielding plate 45 and the lower plate of the case 25 to support the shielding plate 45 upward.

Specifically, the support member 50 may support the shielding plate 45 upwardly, thereby indirectly supporting the adiabatic material 35 and the working coil WC upwardly, and through this, the adiabatic material 35 can be in close contact with the upper plate portion 15.

As a result, the distance between the working coil WC and the object to be heated HO can be kept constant.

For reference, the support member 50 may include, for example, an elastic body (for example, a spring) for supporting the shielding plate 45 upward, but is not limited thereto. In addition, since the support member 50 is not an essential component, the induction heating type cooktop 1 may be omitted.

The cooling fan 55 may be installed inside the case 25 to cool the working coil WC.

Specifically, the cooling fan 55 may be controlled to be driven by the aforementioned control module and may be installed on the sidewall of the case 25. Of course, the cooling fan 55 may be installed at a location other than the sidewall of the case 25, but in an embodiment of the present disclosure, for convenience of explanation, a case where the cooling fan 55 is installed on the side wall of the case 25 will be described as an example.

In addition, as illustrated in FIGS. 2 and 3, the cooling fan 55 suctions air from the outside of the case 25 and delivers the air to the working coil WC or suctions air (particularly, heat) inside the case 25 to be capable of discharging the air to the outside of the case 25.

Through this, efficient cooling of the components (particularly, the working coil WC) inside the case 25 is possible.

In addition, as described above, the air outside the case 25 delivered to the working coil WC by the cooling fan 55 may be guided to the working coil WC by the spacer. Accordingly, direct and efficient cooling of the working coil WC is possible, thereby being capable of improving the durability of the working coil WC (that is, improving the durability by preventing thermal damage).

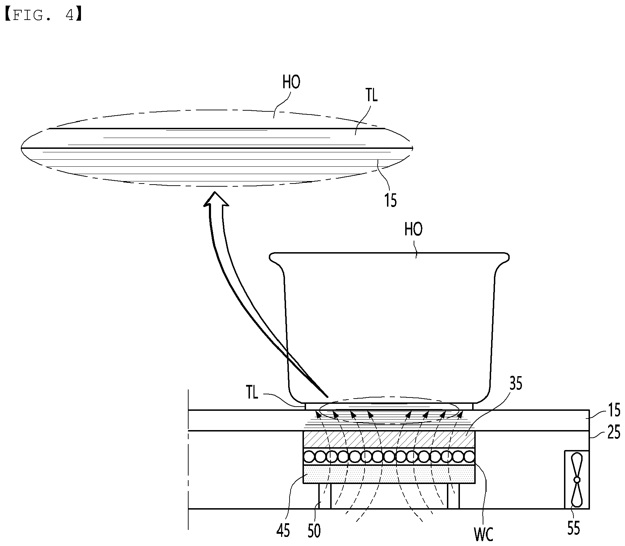

As such, the induction heating type cooktop 1 according to an embodiment of the present disclosure may have the above-described characteristics and configuration, and hereinafter, with reference to FIGS. 4 to 7, the characteristics and configuration of the above-described thin film is described in more detail.

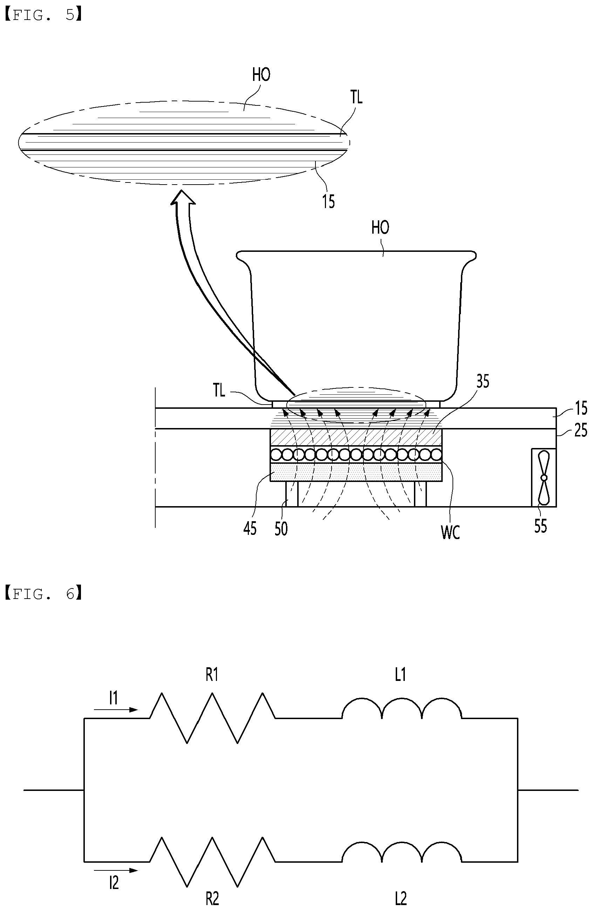

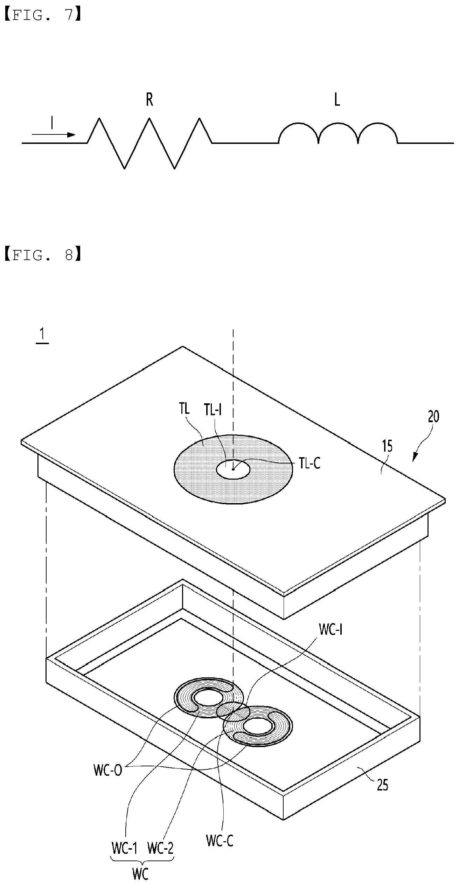

FIGS. 4 and 5 are diagrams for explaining a relationship between a thickness of a thin film and a skin depth, and FIGS. 6 and 7 are diagrams for explaining a change in impedance between a thin film and an object to be heated according to the type of object to be heated.

The thin film TL may be made of a material having low relative permeability.

Specifically, since the relative permeability of the thin film TL is low, the skin depth of the thin film TL may be deep. Here, the skin depth means an electric current penetration depth from the surface of the material, and the relative permeability may be inversely proportional to the skin depth. Accordingly, as the relative permeability of the thin film TL decreases, the skin depth of the thin film TL deeps.

In addition, the skin depth of the thin film TL may be thicker than the thickness of the thin film TL. In other words, the thin film TL has a thin thickness (for example, 0.1 um to 1,000 um thickness), and since the skin depth of the thin film TL is deeper than the thickness of the thin film TL, the magnetic field generated by the working coil WC passes through the thin film to transfer to the object to be heated HO and thus an eddy current may be induced in the object to be heated HO.

In other words, as illustrated in FIG. 4, when the skin depth of the thin film TL is shallower than the thickness of the thin film TL, it can be difficult for the magnetic field generated by the working coil WC to reach the object to be heated HO.

However, as illustrated in FIG. 5, when the skin depth of the thin film TL is deeper than the thickness of the thin film TL, the magnetic field generated by the working coil WC may reach the object to be heated HO. In other words, in the embodiment of the present disclosure, since the skin depth of the thin film TL is deeper than the thickness of the thin film TL, the magnetic field generated by the working coil WC passes through the thin film TL and most of the magnetic field is transferred to the object to be heated HO and consumed, and accordingly, the object to be heated HO can be mainly heated.

Meanwhile, since the thin film TL has a thin thickness as described above, the thin film TL may have a resistance value that can be heated by the working coil WC.

Specifically, the thickness of the thin film TL may be inversely proportional to a resistance value (that is, surface resistance value) of the thin film TL. In other words, as the thickness of the thin film TL coated on the upper plate portion 15 is thinner, since the resistance value (that is, surface resistance value) of the thin film TL increases, the thin film TL may be thinly coated on the upper plate portion 15, so that characteristics may be changed to a load that can be heated.

For reference, the thin film TL may have a thickness of, for example, 0.1 um to 1,000 µm, but is not limited thereto.

The thin film TL having such a characteristic is present to heat the nonmagnetic material, and the impedance characteristic between the thin film TL and the object to be heated HO can be changed according to whether the object to be heated HO disposed on the upper plate portion 15 is a magnetic material or a nonmagnetic material.

First, a case whether the object to be heated HO is a magnetic material will be described as follows.

When the magnetic object to be heated HO is disposed on the upper plate portion 15, and the working coil WC is driven, as illustrated in FIG. 6, the resistance component R1 and the inductor component L1 of the object to be heated HO may form an equivalent circuit with the resistance component R2 and the inductor component L2 of the thin film TL.

In this case, the impedance of the magnetic object to be heated HO (that is, the impedance composed of R1 and L1) may be smaller than the impedance of the thin film TL (that is, the impedance composed of R2 and L2).

Accordingly, when the equivalent circuit as described above is formed, the magnitude of the eddy current I1 applied to the magnetic object to be heated HO may be greater than the magnitude of the eddy current I2 applied to the thin film TL. Accordingly, most of the eddy currents generated by the working coil WC may be applied to the object to be heated HO, so that the object to be heated HO may be heated.

In other words, when the object to be heated HO is a magnetic material, since the above-described equivalent circuit is formed and most of the eddy current is applied to the object HO, the working coil WC can directly heat the object to be heated HO.

Of course, since some eddy current is also applied to the thin film TL to slightly heat the thin film TL, the object to be heated HO may be slightly heated indirectly by the thin film TL. In this case, the working coil WC may be a main heating source, and the thin film TL may be a secondary heating source. However, compared with the degree to which the object HO is directly heated by the working coil WC, the degree to which the object to be heated HO is indirectly heated by the thin film TL may be not significant.

Next, a case where the object to be heated is a nonmagnetic material will be described as follows.

When the nonmagnetic object to be heated HO is disposed on the upper plate portion 15 and the working coil WC is driven, there may be no impedance in the nonmagnetic object to be heated HO, and there may be impedance the thin film TL. In other words, the resistance component R and the inductor component L may exist only in the thin film TL.

Accordingly, when the nonmagnetic object to be heated HO is disposed on the upper plate portion 15 and the working coil WC is driven, as illustrated in FIG. 7, the resistance component R and he inductor component L of the thin film TL may form an equivalent circuit.

Accordingly, the eddy current I may be applied only to the thin film TL, and the eddy current may not be applied to the nonmagnetic object to be heated. More specifically, the eddy current I generated by the working coil WC may be applied only to the thin film TL, so that the thin film TL may be heated.

In other words, when the object to be heated HO is a nonmagnetic material, as described above, since the eddy current I is applied to the thin film TL to heat the thin film TL, the nonmagnetic object to be heated HO may be indirectly heated by the thin film TL heated by the working coil WC. In this case, the thin film TL may be a main heating source.

In summary, the object to be heated HO may be directly or indirectly heated by a single heat source called the working coil WC regardless of whether the object to be heated HO is a magnetic material or a nonmagnetic material. In other words, when the object to be heated HO is a magnetic material, the working coil WC directly heats the object to be heated HO, and when the object to be heated HO is a nonmagnetic material, the thin film TL heated by the working coil WC can indirectly heat the object to be heated HO.

As described above, since the induction heating type cooktop 1 according to an embodiment of the present disclosure can heat both a magnetic material and a nonmagnetic material, regardless of the disposition position and type of the object to be heated HO, the object to be heated can be heated. Accordingly, since the user may place the object to be heated on any heating area on the top plate portion 15 without needing to determine whether the object to be heated HO is a magnetic material or a nonmagnetic material, ease of use may be improved.

In addition, since the induction heating type cooktop 1 of according to an embodiment of the present disclosure can directly or indirectly heat an object to be heated with the same heat source, there is no need to provide a separate heating plate or a radiant heater. Accordingly, it is possible to not only increase the heating efficiency but also reduce the material cost.

Meanwhile, when the object to be heated HO is a magnetic material, the above-described equivalent circuit is formed, and accordingly, most of the eddy current is applied to the object to be heated HO. However, a portion of the eddy current is also applied to the thin film TL, and the heating efficiency for the object to be heated HO, which is a magnetic material, is lowered. Accordingly, it is preferable to minimize the eddy current applied to the thin film TL. In other words, when the object to be heated HO is a magnetic material, it is preferable to maximize the magnetic field coupled to the object to be heated HO.

For the same reason, when the object to be heated HO is a nonmagnetic material, it is preferable to maximize the eddy current applied to the thin film TL.

To this end, the induction heating type cooktop 1 according to an embodiment of the present disclosure may adjust the magnetic field concentration region through the current direction control of the working coil WC so as to increase the heating efficiency regardless of whether the object to be heated HO is a magnetic material or a nonmagnetic material.

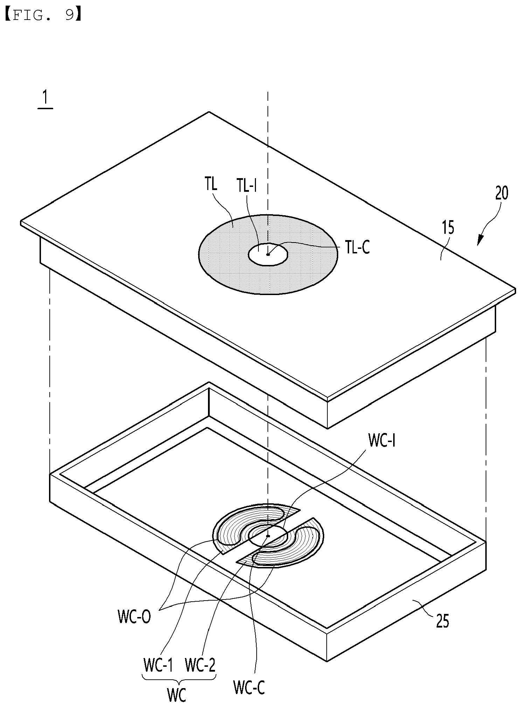

Next, a method in which the induction heating type cooktop 1 according to an embodiment of the present disclosure adjusts the magnetic field concentration region through the current direction control of the working coil WC will be described with reference to FIGS. 8 and 9.

FIGS. 8 and 9 are diagrams for explaining an induction heating type cooktop according to an embodiment of the present disclosure.

Meanwhile, FIG. 1 illustrates a case where two craters are provided so that the induction heating type cooktop heats the object to be heated HO by driving the first working coil WC1, or heats the object to be heated HO by driving the second working coil WC2, but FIG. 8 is described on the assumption that only one crater is provided for convenience of description. In other words, the number of craters provided in the induction heating type cooktop according to the present disclosure may vary.

Referring to FIG. 8, the induction heating type cooktop according to an embodiment of the present disclosure may include a working coil WC disposed under a thin film TL, and the working coil WC may include a plurality of working coils.

For example, the plurality of working coils WC-1 and WC-2 may include a first working coil WC-1 and a second working coil WC-2, but the number of working coils provided in one working coil WC may vary. Hereinafter, it is assumed that one working coil WC includes the first working coil WC-1 and the second working coil WC-2.

The first working coil WC-1 and the second working coil WC-2 constituting the working coil WC may be disposed adjacent to each other. That the first working coil WC-1 and the second working coil WC-2 are disposed adjacent to each other may mean that the first working coil WC-1 is disposed close to the second working coil WC-2 to the extent that the magnetic field induced in one working coil (for example, the first working coil WC-1) affects the magnetic field induced in the other working coil (for example, the second working coil WC-2) . Accordingly, as illustrated in FIG. 8, the first working coil WC-1 and the second working coil WC-2 may be disposed in contact with each other at one point.

One thin film TL vertically overlapping the working coil WC including the first working coil WC-1 and the second working coil WC-2 is coated on the upper surface or the lower surface of the upper plate portion 15.

An opening TL-I may be formed in the center of the thin film TL. The opening TL-I may include a center TL-C of the opening of the thin film TL and a region up to a predetermined distance from the center TL-C of the opening. The opening TL-I of the thin film is a portion on which the thin film TL is not coated, and may be an open region for sensing the temperature of the upper plate portion 15.

In addition, the opening TL-I of the thin film may be a region through which the magnetic field induced by the working coil WC passes. That is, the opening TL-I of the thin film may serve to pass the magnetic field so that the magnetic field generated in the working coil WC is coupled to the object to be heated HO.

The center TL-C of the opening may overlap the center WC-C of the working coil in a vertical direction. At least a portion of the opening TL-I and the central region WC-I of the working coil may overlap in a vertical direction. The center region WC-I of the working coil may include a center WC-C of the working coil and a region up to a predetermined distance from the center WC-C of the working coil. Although it is illustrated that the diameters of the opening TL-I of the thin film and the central region WC-I of the working coil are identical to each other, the present disclosure is not limited thereto.

Through this arrangement, when the magnetic field concentration region to be described below is the center region WC-I of the working coil, the magnetic field passing through the opening TL-I may be more coupled to the object to be heated HO.

In addition, the outer region WC-O of the working coil may be disposed to vertically overlap at least a portion of the thin film TL. Through this, when the magnetic field concentration region is the outer region WC-O of the working coil, the magnetic field can be more coupled to the thin film TL. Accordingly, it is possible to increase the heating efficiency of the object to be heated HO, which is a nonmagnetic material.

According to an embodiment, the first working coil WC-1 and the second working coil WC-2 may each have a circular shape with an empty center as illustrated in FIG. 8. In other words, the first working coil WC-1 and the second working coil WC-2 may each have a hollow circular shape. According to another embodiment, as illustrated in FIG. 9, the first working coil WC-1 and the second working coil WC-2 may each have a semicircular shape. In this case, holes may not be formed in the first working coil WC-1 and the second working coil WC-2. In other words, the working coils may have various shapes. Accordingly, the shape of the working coil does not limit the scope of the present disclosure. In the present specification, for convenience of description, the working coil WC having a circular shape with an empty center will be described.

As illustrated in FIG. 9, the first working coil WC-1 and the second working coil WC-2 each having a semicircular shape may be arranged such that the working coil WC has a single circular shape. In the working coil WC having a circular shape, the opening TL-1 and the central region WC-I , which is a region up to a predetermined distance from the center of the working coil WC, may at least partially overlap each other in a vertical direction. The outer region WC-O of the working coil and the thin film TL may at least partially overlap each other in a vertical direction.

As described above, the first working coil WC-1 and the second working coil WC-2 constituting the working coil WC may each be controlled such that electric currents flow in the same direction or in different directions. The magnetic field concentration region may be changed according to the direction of the electric currents flowing through the first working coil WC-1 and the second working coil WC-2. Next, the magnetic field concentration region that is changed according to the direction of the electric currents flowing through the first working coil WC-1 and the second working coil WC-2 will be described.

First, the magnetic field concentration region when the directions of the electric currents flowing through the first working coil WC-1 and the second working coil WC-2 are the same as each other will be described with reference to FIGS. 10A and 10B.

FIG. 10A is an exemplary diagram illustrating the directions of the electric currents flowing through the first working coil and the second working coil in the cooktop according to an embodiment of the present disclosure.

For example, when it is assumed that the electric current flowing through the first working coil WC-1 is clockwise as illustrated in FIG. 10A, the electric current flowing through the second working coil WC-2 may also be clockwise, which is the same as the direction of the electric current flowing through the first working coil WC-1.

In this case, the magnetic field generated in the first working coil WC-1 and the magnetic field generated in the second working coil WC-2 may be formed in the same direction in the outer region WC-O of the working coil. When the magnetic field generated in the first working coil WC-1 and the magnetic field generated in the second working coil WC-2 are formed in the same direction, the magnetic field generated in each working coil may be added in the outer region WC-O of the working coil.

Meanwhile, in the central region WC-I of the working coil, the magnetic field generated in the first working coil WC-1 and the magnetic field generated in the second working coil WC-2 may be formed in different directions. When the magnetic field generated in the first working coil WC-1 and the magnetic field generated in the second working coil WC-2 are formed in different directions, the magnetic field generated in each working coil may be offset in the central region WC-I of the working coil.

Therefore, when the direction of the electric current flowing through the first working coil WC-1 is the same as the direction of the electric current flowing through the second working coil WC-2, the magnetic field strength of the central region WC-I of the working coil may be weaker than the magnetic field strength of the outer region WC-O of the working coil.

FIG. 10B is an exemplary diagram illustrating the magnetic field distribution around the working coil when the electric current flows through the working coil as illustrated in FIG. 10A.

It can be seen that, when the direction of the electric current flowing through the first working coil WC-1 is the same as the direction of the electric current flowing through the second working coil WC-2 as illustrated in FIG. 10B, the magnetic field is concentrated in the outer region WC-O of the working coil. In addition, it can be seen that the magnetic field of the central region WC-I of the working coil is relatively weak.

Next, a method in which the induction heating type cooktop 1 heats the object to be heated HO, which is a nonmagnetic material, will be described with reference to FIGS. 10C and 10D.

FIG. 10C is an exemplary diagram illustrating the coupling state of the magnetic field when the electric current flows through the working coil as illustrated in FIG. 10A.

When the induction heating type cooktop 1 according to an embodiment of the present disclosure is viewed from the side, the first working coil WC-1 may be positioned at one side of the working coil WC, and the second working coil WC-2 may be positioned at the other side of the working coil WC. The center region WC-I of the working coil including the contact point WC-C between the first working coil WC-1 and the second working coil WC-2 is positioned at the center of the working coil WC. The outer region WC-O of the working coil may include the remaining regions of the first working coil WC-1 and the second working coil WC-2, which are not included in the central region WC-I of the working coil.

Arrows shown in the drawings may indicate the magnetic fields generated in the first working coil WC-1 and the second working coil WC-2. In other words, it can be seen that, when the direction of the electric current flowing through the first working coil WC-1 is the same as the direction of the electric current flowing through the second working coil WC-2, the magnetic field is concentrated in the outer region WC-O of the working coil. In other words, when the direction of the electric current flowing through the first working coil WC-1 is the same as the direction of the electric current flowing through the second working coil WC-2, the magnetic field concentration region may be formed in the outer region WC-O of the working coil.

The magnetic field induced in the working coil WC may be coupled to the thin film TL vertically overlapping the outer region WC-O of the working coil to heat the thin film TL, and the heated thin film TL may heat the object to be heated HO.

FIG. 10D is an exemplary diagram illustrating the thin film when the magnetic field concentration region is the outer region of the working coil.

As illustrated in FIG. 10D, the eddy current EC flowing through the thin film TL may heat the thin film TL. In this case, the eddy current EC does not flow through the opening TL-I formed in the center.

As such, when the direction of the electric current flowing through the first working coil WC-1 is the same as the direction of the electric current flowing through the second working coil WC-2, the magnetic field concentrated in the outer region WC-O of the working coil has a high probability of being coupled to the thin film. Accordingly, the eddy current EC flowing through the thin film TL may be maximized. Therefore, when the direction of the electric current flowing through the first working coil WC-1 is the same as the direction of the electric current flowing through the second working coil WC-2, it may be suitable for heating the object to be heated HO, which is a nonmagnetic material.

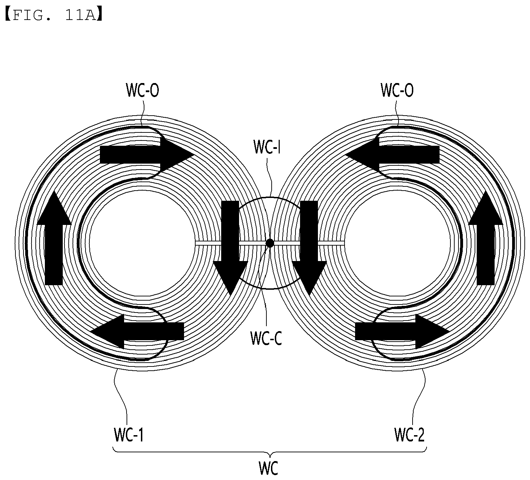

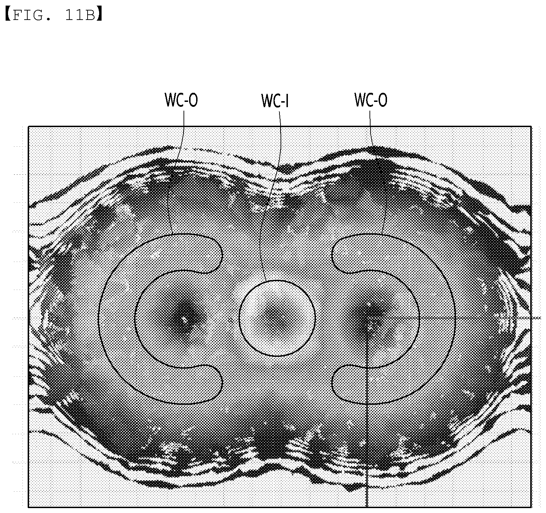

Next, the magnetic field concentration region when the directions of the electric currents flowing through the first working coil WC-1 and the second working coil WC-2 are different from each other will be described with reference to FIGS. 11A and 11B.

FIG. 11A is an exemplary diagram illustrating the directions of the electric currents flowing through the first working coil and the second working coil in the cooktop according to an embodiment of the present disclosure.

For example, when it is assumed that the electric current flowing through the first working coil WC-1 is clockwise as illustrated in FIG. 11A, the electric current flowing through the second working coil WC-2 may be counterclockwise, which is different from the direction of the electric current flowing through the first working coil WC-1.

In this case, the magnetic field generated in the first working coil WC-1 and the magnetic field generated in the second working coil WC-2 may be formed in the same direction in the central region WC-I of the working coil. When the magnetic field generated in the first working coil WC-1 and the magnetic field generated in the second working coil WC-2 are formed in the same direction, the magnetic field generated in each working coil may be added in the central region WC-I of the working coil.

Meanwhile, in the outer region WC-O of the working coil, the magnetic field generated in the first working coil WC-1 and the magnetic field generated in the second working coil WC-2 may be formed in different directions. When the magnetic field generated in the first working coil WC-1 and the magnetic field generated in the second working coil WC-2 are formed in different directions, the magnetic field generated in each working coil may be offset in the outer region WC-O of the working coil.

Therefore, when the direction of the electric current flowing through the first working coil WC-1 is different from the direction of the electric current flowing through the second working coil WC-2, the magnetic field strength of the central region WC-I of the working coil may be stronger than the magnetic field strength of the outer region WC-O of the working coil.

FIG. 11B is an exemplary diagram illustrating the magnetic field distribution around the working coil when the electric current flows through the working coil as illustrated in FIG. 11A.

It can be seen that, when the direction of the electric current flowing through the first working coil WC-1 is different from the direction of the electric current flowing through the second working coil WC-2 as illustrated in FIG. 11B, the magnetic field is concentrated in the central region WC-I of the working coil. In addition, it can be seen that the magnetic field of the outer region WC-O of the working coil is weak.

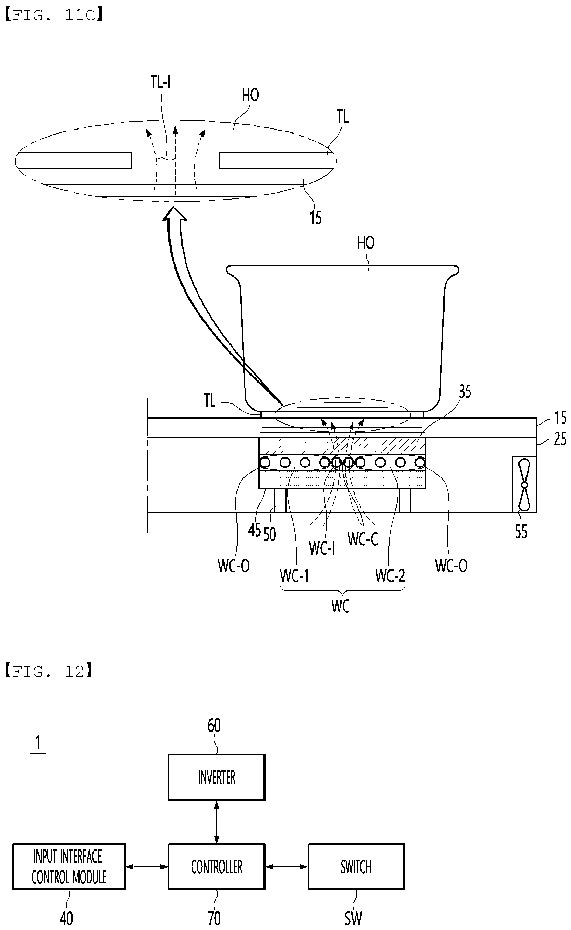

Next, a method in which the induction heating type cooktop 1 heats the object to be heated HO, which is a magnetic material, will be described with reference to FIG. 11C.

FIG. 11C is an exemplary diagram illustrating the coupling state of the magnetic field when the electric current flows through the working coil as illustrated in FIG. 11A.

When the induction heating type cooktop 1 according to an embodiment of the present disclosure is viewed from the side, the first working coil WC-1 may be positioned at one side of the working coil WC, and the second working coil WC-2 may be positioned at the other side of the working coil WC. The center region WC-I of the working coil including the contact point WC-C between the first working coil WC-1 and the second working coil WC-2 is positioned at the center of the working coil WC. The outer region WC-O of the working coil may include the remaining regions of the first working coil WC-1 and the second working coil WC-2, which are not included in the central region WC-I of the working coil.

Arrows shown in the drawings may indicate the magnetic fields generated in the first working coil WC-1 and the second working coil WC-2. In other words, it can be seen that, when the direction of the electric current flowing through the first working coil WC-1 is different from the direction of the electric current flowing through the second working coil WC-2, the magnetic field is concentrated in the central region WC-I of the working coil. In other words, when the direction of the electric current flowing through the first working coil WC-1 is different from the direction of the electric current flowing through the second working coil WC-2, the magnetic field concentration region may be formed in the central region WC-I of the working coil.

The magnetic field induced in the working coil WC may pass through the opening TL-I of the thin film, which vertically overlaps the central region WC-I of the working coil, to generate the eddy current in the object to be heated HO, and may heat the object to be heated HO.

As such, when the direction of the electric current flowing through the first working coil WC-1 is different from the direction of the electric current flowing through the second working coil WC-2, the magnetic field concentrated in the central region WC-I of the working coil has a high probability of being coupled to the object to be heated HO. Accordingly, the eddy current EC flowing through the thin film TL may be minimized. Therefore, when the direction of the electric current flowing through the first working coil WC-1 is different from the direction of the electric current flowing through the second working coil WC-2, it may be suitable for heating the object to be heated HO, which is a magnetic material.

Meanwhile, the induction heating type cooktop 1 according to an embodiment of the present disclosure may increase heating efficiency by controlling the magnetic field concentration region without a container discrimination sensor for distinguishing whether the object to be heated HO is a magnetic material or a nonmagnetic material.

Next, a method in which the induction heating type cooktop 1 according to an control the present disclosure controls the magnetic field concentration region will be described with reference to FIGS. 12 to 14.

FIG. 12 is a control block diagram illustrating the configuration of the induction heating type cooktop according to an embodiment of the present disclosure.

Referring to FIG. 12, the induction heating type cooktop 1 may include an input interface control module 40, an inverter 60, a controller 70, and a switch SW.

The input interface control module 40 may receive input information such as heating intensity or driving time received from an interface (not illustrated) and transmit the input information to the controller 70. The input information that the controller 70 receives through the input interface control module 40 may include information on the target power.

The inverter 60 may provide a resonance current to the working coil WC through a switching operation. The switching operation of the inverter 60 may be performed by a switching operation control signal of the controller 70.

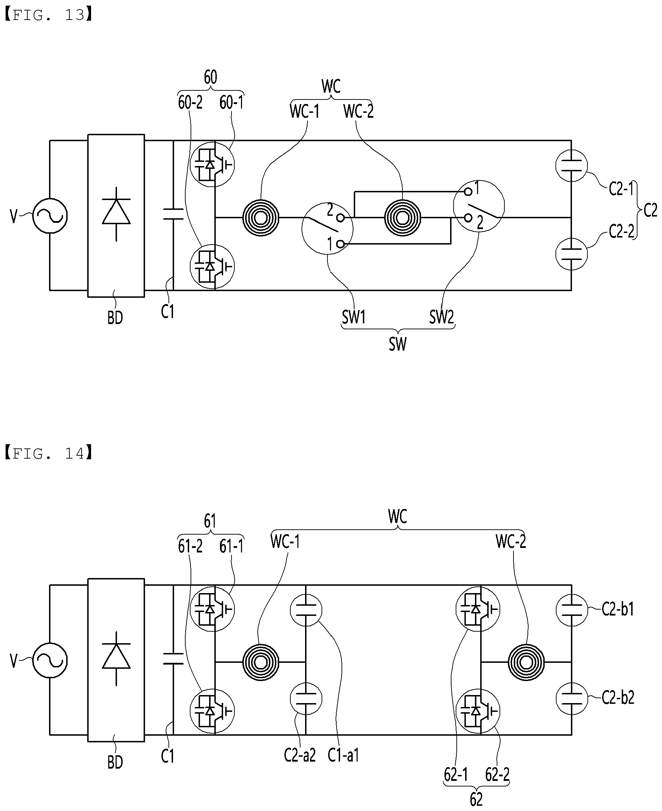

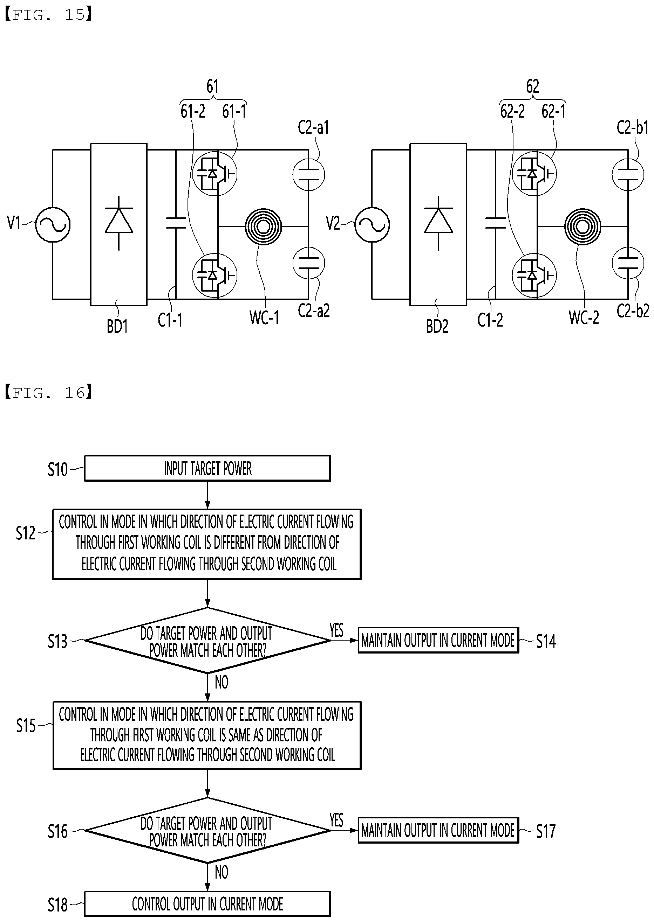

According to an embodiment, the inverter 60 may include a first inverter 61 (see FIGS. 14 and 15) for driving the first working coil WC-1 and a second inverter (see FIGS. 14 and 15) for driving the second working coil WC-2.

The controller 70 may control the first inverter 61 to change the direction of the electric current flowing through the first working coil WC-1, and may control the second inverter 62 to change the direction of the electric current flowing through the second working coil WC-2.

According to an embodiment, the switch SW may be driven to control the directions of electric currents flowing through the first working coil WC-1 and the second working coil WC-2. A method of controlling the direction of the electric current of the working coil by driving the switch SW will be described in detail with reference to FIG. 15.

In other words, the controller 70 may control the switch SW or control the first inverter 61 and the second inverter 62 to change the direction of the electric current, according to a circuit configuration to be described below. This will be described in detail below with reference to FIGS. 13 to 15.

The controller 70 may control the direction of the electric current flowing through the first working coil WC-1 and the direction of the electric current flowing through the second working coil WC-2 by comparing the target power with the output power.

In addition, the controller 70 may control the overall operations of the induction heating type cooktop 1.

The induction heating type cooktop 1 illustrated in FIG. 12 is only an embodiment of to the present disclosure, and thus some components illustrated in FIG. 12 may be integrated, added, or omitted according to the specification of the induction heating type cooktop 1 to be actually implemented.

The induction heating type cooktop 1 according to an embodiment of the present disclosure may configure a control circuit for controlling the directions of the electric currents flowing through the first working coil WC-1 and the second working coil WC-2 in various ways.

The control circuit may be configured to include the switch SW in one inverter 60 so that the directions of the electric currents flowing through the first working coil WC-1 and the second working coil WC-2 are controlled to be the same as each other or different from each other, may be configured to include the inverter 60 for each coil, or may be configured to include a separate bridge diode BD for each coil.

Next, a method in which the controller 70 controls the direction of the electric current flowing through the working coil WC will be described through circuit diagrams with reference to FIGS. 13 to 15.

FIG. 13 is a circuit diagram of an induction heating type cooktop according to a first embodiment of the present disclosure.

The control circuit may include a power supply V that provides AC power, a bridge diode BD that rectifies AC power of the power supply to DC power, a DC link capacitor C1 that smooths the rectified DC power, an inverter 60 that converts the rectified DC power into a resonance current through a switching operation and provides the resonance current to a working coil WC, the working coil WC that forms a magnetic field due to the resonance current, and a switch SW and a resonance capacitor C2 that control the direction of the electric current of the working coil WC.

The power supply V, the bridge diode BD, and the DC link capacitor C1 may rectify the AC power to the DC power, may smooth the rectified DC power, and provide the smoothed DC power to the inverter 60.

The inverter 60 may convert the rectified DC power into the resonance current through the switching operation, and may include at least two switching elements 60-1 and 60-2. The switching elements 60-1 and 60-2 may be high-frequency semiconductor elements. For example, the switching elements may include an IGBT, a BJT, a MOSFET, or the like. Since the driving method of the inverter 60 is a known technology, a detailed description thereof is omitted.

One end of the first working coil WC-1 may be connected between the first switching element 60-1 and the second switching element 60-2, and the other end of the first working coil WC-1 may be connected to the first switch SW1. One end of the second working coil WC-2 may be connected to the first switch SW1, and the other end of the second working coil WC2 may be connected to the second switch SW2.

The second switch SW2 may have one end connected to the second working coil WC-2 and the other end connected to the resonance capacitor C2.

The first switch SW1 and the second switch SW2 may be in contact with the first point at the same time or in contact with the second point at the same time by a control signal from the controller 70.

For example, when the first switch SW1 and the second switch SW2 are connected to the first point, the electric current flowing out of the first working coil WC-1 in a clockwise direction moves along the first point connected to the second switch SW2 after flowing out of the second working coil WC-2 in a counterclockwise direction along the first point connected to the first working coil WC-1.

In other words, when the first switch SW1 and the second switch SW2 are in contact with the first point at the same time, the direction of the electric current flowing through the first working coil WC-1 may be opposite to the direction of the electric current flowing through the second working coil WC-2.

As another example, when the first switch SW1 and the second switch SW2 are connected to the second point at the same time, the electric current flowing out of the first working coil WC-1 in a clockwise direction moves along the second point connected to the second switch SW2 after flowing out of the second working coil WC-2 in a clockwise direction along the second point connected to the first working coil WC-1.

In other words, when the first switch SW1 and the second switch SW2 are in contact with the second point at the same time, the direction of the electric current flowing through the first working coil WC-1 may be the same as the direction of the electric current flowing through the second working coil WC-2.

One end of the second switch SW2 may be connected to the second working coil WC-2 by contacting the first point or the second point, and the other end of the second switch SW2 may be connected between the first resonance capacitor C2-1 and the second resonance capacitor C2-2.

Through the configuration of the control circuit, the induction heating type cooktop 1 according to an embodiment of the present disclosure may control the direction of the electric current flowing through the working coil WC by using one inverter 60 and the switch SW. According to these embodiments, since there is no need to additionally configure a circuit for synchronizing an inverter signal, there is an advantage in that the structure can be simplified.

FIG. 14 is a circuit diagram of an induction heating type cooktop according to a second embodiment of the present disclosure.

According to the second embodiment, an inverter 60 may include a first inverter 61 and a second inverter 62.

One end of a first working coil WC-1 may be connected between a first switching element 61-1 of the first inverter 61 and a second switching element 61-2 of the first inverter 61, and the other end of the first working coil WC-1 may be connected between a first resonance capacitor C2-a1 and a second resonance capacitor C2-a2.

One end of a second working coil WC-2 may be connected between a first switching element 62-1 of the second inverter 62 and a second switching element 62-2 of the second inverter 62, and the other end of the second working coil WC-2 may be connected between a third resonance capacitor C2-b1 and a fourth resonance capacitor C2-b2.

In other words, a controller 70 may control the first inverter 61 connected to the first working coil WC-1 and the second inverter 62 connected to the second working coil WC-2 so that the direction of the electric current flowing through the first working coil WC-1 and the direction of the electric current flowing through the second working coil WC-2 are the same as each other or different from each other. In addition, the controller 70 may control the first inverter 61 or the second inverter 62 so that the electric current flowing through the first working coil WC-1 or the second working coil WC-2 becomes 0. Accordingly, the magnetic field region of the working coil WC can be controlled precisely, as compared with a case where a single inverter is used.

Through the configuration of the control circuit, the induction heating type cooktop 1 according to an embodiment of the present disclosure may precisely control the direction of the electric current flowing through the first working coil WC-1 and the direction of the electric current flowing through the second working coil WC-2. Accordingly, there is an advantage in that the magnetic field concentration region can be variously controlled.

FIG. 15 is a circuit diagram of an induction heating type cooktop according to a third embodiment of the present disclosure.

The induction heating type cooktop 1 according to the third embodiment may be driven through a plurality of inverters having separate bridge diodes BD.

Referring to FIG. 15, the control circuit of the first working coil WC-1 may be configured to include a first power supply V1, a first bridge diode BD1, a first DC link capacitor C1-1, a first inverter 61, and first and second resonance capacitors C2-a1 and C2-a2.

The control circuit of the second working coil WC1 may be configured to include a second power supply V1, a second bridge diode BD2, a second DC link capacitor C1-2, a second inverter 62, and third and fourth resonance capacitors C2-b1 and C2-b2.

In other words, the control circuit of the first working coil WC-1 and the control circuit of the second working coil WC-2 may be configured separately.

According to the configuration of the control circuit of FIG. 15, AC power supplied from the first power supply V1 and the second power supply V2 may be rectified into DC power through the first bridge diode BD1 and the second bridge diode BD2, and separate resonance currents may be provided to the first working coil WC-1 and the second working coil WC-2 by the switching operations of the first inverter 61 and the second inverter 62.

As in the embodiments described above, the controller 70 may control the first inverter 61 connected to the first working coil WC-1 and the second inverter 62 connected to the second working coil WC-2 so that the direction of the electric current flowing through the first working coil WC-1 and the direction of the electric current flowing through the second working coil WC-2 are the same as each other or different from each other.

The control circuit according to the third embodiment may increase the input voltage applied to the working coil WC through the configuration having the separate bridge diode BD. Accordingly, there is an advantage in that the output of the working coil WC can be increased.

Meanwhile, the induction heating type cooktop 1 according to an embodiment of the present disclosure may operate in a state in which one of the magnetic material and the nonmagnetic material is set with a priority.

According to an embodiment, in the induction heating type cooktop 1, the priority may be set to a case where the object to be heated HO is a magnetic material.

An operating method of the induction heating type cooktop 1 when a case where the object to be heated HO is a magnetic material is set with a priority according to an embodiment of the present disclosure will be described with reference to FIG. 16.

FIG. 16 is a flowchart illustrating an operating method of an induction heating type cooktop when a magnetic material is a priority according to an embodiment of the present disclosure.

The controller 70 may receive target power through the input interface control module 40 (S10). The target power may be power required to be output from the power supply V that drives the working coil WC. The target power may vary depending on a user's desired heating intensity.

The controller 70 may perform control in a mode in which the direction of the electric current flowing through the first working coil WC-1 is different from the direction of the electric current flowing through the second working coil WC-2 (S12).

When the circuit is configured as illustrated in FIG. 13, the controller 70 may control the switch SW so that the first direction of the electric current flowing through the first working coil WC-1 is different from the second direction of the electric current flowing through the second working coil WC-2. When the circuit is configured as illustrated in FIG. 14 or 15, the controller 70 may control the first inverter 61 and the second inverter 62 so that the first direction of the electric current flowing through the first working coil WC-1 is different from the second direction of the electric current flowing through the second working coil WC-2.

As described above, in the mode in which the direction of the electric current flowing through the first working coil WC-1 is different from the direction of the electric current flowing through the second working coil WC-2, the magnetic field concentration region is the central region WC-I of the working coil. Accordingly, this mode may be a suitable mode when the object to be heated HO is a magnetic material.

The controller may determine whether the target power and the output power match each other in the mode in which the directions of the electric currents are different from each other (S13). The output power is a value obtained by multiplying a voltage and an electric current in the power supply V for driving the working coil WC, and the controller 70 may sense the output power of the power supply V to determine whether the output power and the target power match each other.

When the target power and the output power match each other in the mode in which the directions of the electric currents are different from each other, it may mean that the object to be heated HO is being properly heated to the target output.

Accordingly, when the target power and the output power match each other, the controller 70 may maintain the output in the current mode (S14). In other words, the controller 70 may continuously maintain the mode in which the first direction of the electric current flowing through the first working coil WC-1 is different from the second direction of the electric current flowing through the second working coil WC-2.

When the target power and the output power do not match each other even if the output power is controlled by increasing or decreasing the applied voltage, the controller 70 may perform control in the mode in which the direction of the electric current flowing through the first working coil WC-1 is the same as the direction of the electric current flowing through the second working coil WC-2 (S15).

When the target power and the output power do not match each other even if the output power is controlled by increasing or decreasing the applied voltage, it may mean that the object to be heated HO is not being properly heated to the target output. In other words, since the object to be heated HO is not heated when the magnetic field concentration region is the central region WC-I of the working coil, it means that the magnetic field passing through the central region WC-I of the working coil is not coupled to the object to be heated HO. This may mean that the object to be heated HO is a nonmagnetic material. Accordingly, it may mean that the magnetic field concentration region has to be changed to the outer region WC-O of the working coil.

Since the magnetic field concentration region is the center region WC-I of the working coil in the mode in which the directions of the electric currents are different from each other, the strength of the magnetic field coupled to the thin film TL is weak, and thus, the target power and the output power may not match each other when the object to be heated HO is a nonmagnetic material.

Therefore, when the target power and the output power do not match each other in the mode in which the direction of the electric current flowing through the first working coil WC-1 is different from the direction of the electric current flowing through the second working coil WC-2, the controller 70 may control the directions of the electric currents flowing through the first working coil WC-1 and the second working coil WC-2 to be is the same as each other.

The controller 70 may perform control from the mode in which the direction of the electric current flowing through the first working coil WC-1 is different from the direction of the electric current flowing through the second working coil WC-2 to the mode which the direction of the electric current flowing through the first working coil WC-1 is the same as the direction of the electric current flowing through the second working coil WC-2, and may determine whether the target power and the output power match each other (S16).

The controller 70 may maintain the output in the current mode when the target power and the output power match each other while performing control so that the direction of the electric current flowing through the first working coil WC-1 is the same as the direction of the electric current flowing through the second working coil WC-2 (S17).

When the target power and the output power match each other in the mode in which the directions of the electric currents are the same as each other, it may mean that the object to be heated HO is being properly heated to the target output. Accordingly, the controller 70 may continuously maintain the output in the mode in which the first direction of the electric current flowing through the first working coil WC-1 is the same as the second direction of the electric current flowing through the second working coil WC-2.

When the target power and the output power do not match each other, the controller 70 may control the output in the current mode (S18).

When the target power and the output power do not match each other in the mode in which the directions of the electric currents are the same as each other, it may mean that the object to be heated HO is not being properly heated to the target output.

Accordingly, the controller 70 may control the output by increasing or decreasing the applied voltage until the target power is reached while maintaining the current direction of each coil.

Meanwhile, according to an embodiment, in the induction heating type cooktop 1, the priority may be set to a case where the object to be heated HO is a nonmagnetic material.

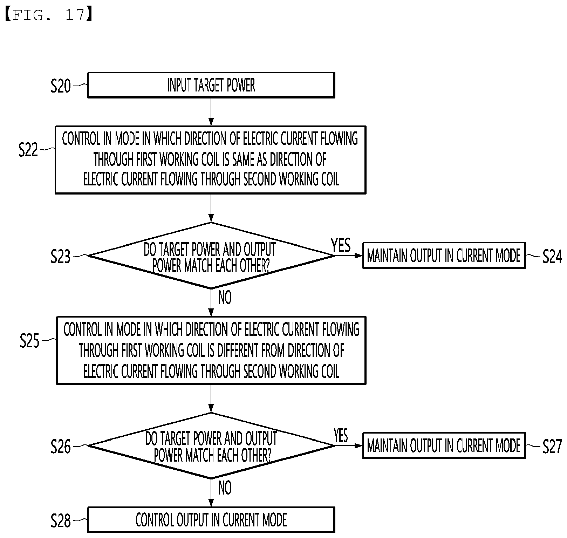

An operating method of the induction heating type cooktop 1 when a case where the object to be heated HO is a nonmagnetic material is set with a priority according to an embodiment of the present disclosure will be described with reference to FIG. 17.

FIG. 17 is a flowchart illustrating an operating method of an induction heating type cooktop when a nonmagnetic material is a priority according to an embodiment of the present disclosure.

The controller 70 may receive target power through the input interface control module 40 (S20).

The controller 70 may perform control in a mode in which the direction of the electric current flowing through the first working coil WC-1 is the same as the direction of the electric current flowing through the second working coil WC-2 (S22). When the controller 70 may control the switch SW or the first inverter 61 and the second inverter 62 so that the first direction of the electric current flowing through the first working coil WC-1 is the same as the second direction of the electric current flowing through the second working coil WC-2.

As described above, in the mode in which the direction of the electric current flowing through the first working coil WC-1 is the same as the direction of the electric current flowing through the second working coil WC-2, the magnetic field concentration region is the outer region WC-O of the working coil. Accordingly, this mode may be a suitable mode when the object to be heated HO is a nonmagnetic material.

The controller may determine whether the target power and the output power match each other in the mode in which the directions of the electric currents are the same as each other (S23) .

When the target power and the output power match each other in the mode in which the directions of the electric currents are the same as each other, it may mean that the object to be heated HO is being properly heated to the target output.

Accordingly, when the target power and the output power match each other, the controller 70 may maintain the output in the current mode (S24). In other words, the controller 70 may continuously maintain the mode in which the first direction of the electric current flowing through the first working coil WC-1 is the same as the second direction.

When the target power and the output power do not match each other even if the output power is controlled by increasing or decreasing the applied voltage, the controller 70 may perform control in the mode in which the direction of the electric current flowing through the first working coil WC-1 is different from the direction of the electric current flowing through the second working coil WC-2 (S25).

When the target power and the output power do not match each other even if the output power is controlled by increasing or decreasing the applied voltage, it may mean that the object to be heated HO is not being properly heated to the target output. In other words, since the object to be heated HO is not heated when the magnetic field concentration region is the outer region WC-O of the working coil, it means that the thin film TL interferes with the coupling of the magnetic field and the object to be heated HO. This may mean that the object to be heated HO is a magnetic material. Accordingly, it may mean that the magnetic field concentration region has to be changed to the central region WC-I of the working coil.

Since the magnetic field concentration region is the outer region WC-O of the working coil in the mode in which the directions of the electric currents are the same as each other, the strength of the magnetic field coupled to the thin film TL is strong, and thus, the target power and the output power may not match each other when the object to be heated HO is a magnetic material.

Therefore, when the target power and the output power do not match each other in the mode in which the direction of the electric current flowing through the first working coil WC-1 is the same as the direction of the electric current flowing through the second working coil WC-2, the controller 70 may control the directions of the electric currents flowing through the first working coil WC-1 and the second working coil WC-2 to be is different from each other.

The controller 70 may perform control from the mode in which the direction of the electric current flowing through the first working coil WC-1 is the same as the direction of the electric current flowing through the second working coil WC-2 to the mode which the direction of the electric current flowing through the first working coil WC-1 is different from the direction of the electric current flowing through the second working coil WC-2, and may determine whether the target power and the output power match each other (S26).

The controller 70 may maintain the output in the current mode when the target power and the output power match each other while controlling the directions of the electric currents flowing through the first working coil WC-1 and the second working coil WC-2 to be is different from each other (S27).

When the target power and the output power match each other in the mode in which the directions of the electric currents are different from each other, it may mean that the object to be heated HO is being properly heated to the target output. Accordingly, the controller 70 may continuously maintain the output in the mode in which the first direction of the electric current flowing through the first working coil WC-1 is different from the second direction of the electric current flowing through the second working coil WC-2.

When the target power and the output power do not match each other, the controller 70 may control the output in the current mode (S28).

When the target power and the output power do not match each other in the mode in which the directions of the electric currents are different from each other, it may mean that the object to be heated HO is not being properly heated to the target output.

Accordingly, the controller 70 may control the output by increasing or decreasing the applied voltage until the target power is reached while maintaining the current direction of each coil.

The controller 70 may control the output according to S10 to S18 of the flowchart when the case where the object to be heated HO is a magnetic material is set with a priority, and may control the output according to S20 to S28 of the flowchart when the case where the object to be heated HO is a nonmagnetic material is set with a priority.

The above description is merely illustrative of the technical spirit of the present disclosure, and various modifications and variations will be possible without departing from the essential characteristics of the present disclosure by those of ordinary skill in the art to which the present disclosure pertains.

Accordingly, the embodiments disclosed in the present disclosure are for explanation rather than limiting the technical spirit of the present disclosure, and the scope of the technical spirit of the present disclosure is not limited by these embodiments.

The protection scope of the present disclosure should be interpreted by the following claims, and all technical ideas within the scope equivalent thereto should be construed as being included in the scope of the present disclosure.

## Claims

1. An induction heating type cooktop comprising:
a case;
a cover plate configured to be coupled to an upper end of the case and provided with an upper plate portion on which an object to be heated is disposed;
a thin film configured to be coated on the upper plate portion and having an opening in a center thereof;
a working coil provided inside the case and including a first working coil and a second working coil; and
at least one inverter configured to be driven to allow electric currents to flow through the first working coil and the second working coil,
wherein a direction of the electric current flowing through the first working coil is the same as or different from a direction of the electric current flowing through the second working coil according to the object to be heated.

2. The induction heating type cooktop of claim 1,
wherein the first working coil and the second working coil are disposed adjacent to each other, and
wherein the first working coil and the second working coil are provided under the thin film.

3. The induction heating type cooktop of claim 2,
wherein a center of the opening of the thin film is disposed to overlap a contact point between the first working coil and the second working coil in a vertical direction.

4. The induction heating type cooktop of claim 1,
wherein, when the direction of the electric current flowing through the first working coil is different from the direction of the electric current flowing through the second working coil, a magnetic field generated in the first working coil and a magnetic field generated in the second working coil are formed in the same direction in a central region of the working coil.

5. The induction heating type cooktop of claim 1,
wherein, when the direction of the electric current flowing through the first working coil is different from the direction of the electric current flowing through the second working coil, a magnetic field strength of a central region of the working coil is stronger than a magnetic field strength of an outer region of the working coil.

6. The induction heating type cooktop of claim 1,
wherein, when the direction of the electric current flowing through the first working coil is the same as the direction of the electric current flowing through the second working coil, a magnetic field generated in the first working coil and a magnetic field generated in the second working coil are formed in the same direction in an outer region of the working coil.

7. The induction heating type cooktop of claim 1,
wherein, when the direction of the electric current flowing through the first working coil is the same as the direction of the electric current flowing through the second working coil, a magnetic field strength of a central region of the working coil is weaker than a magnetic field strength of an outer region of the working coil.

8. The induction heating type cooktop of claim 1, further comprising a controller configured to compare target power with output power and control a first direction of the electric current flowing through the first working coil and a second direction of the electric current flowing through the second working coil.

9. The induction heating type cooktop of claim 8,
wherein the controller is configured to control the first direction and the second direction to be different from each other and control the first direction and the second direction to be the same as each other or different from each other according to whether the target power and the output power match each other.

10. The induction heating type cooktop of claim 9,
wherein the controller is configured to control the first direction and the second direction to be different from each other and control the first direction and the second direction to be the same as each other when the target power and the output power do not match each other.

11. The induction heating type cooktop of claim 8,
wherein the controller is configured to control the first direction and the second direction to be the same as each other and control the first direction and the second direction to be the same as each other or different from each other according to whether the target power and the output power match each other.

12. The induction heating type cooktop of claim 11,
wherein the controller is configured to control the first direction and the second direction to be the same as each other and control the first direction and the second direction to be different from each other when the target power and the output power do not match each other.

13. The induction heating type cooktop of claim 1, further comprising a switch configured to control the directions of the electric currents flowing through the first working coil and the second working coil.

14. The induction heating type cooktop of claim 13, further comprising a controller configured to compare target power with output power and control a first direction of the electric current flowing through the first working coil and a second direction of the electric current flowing through the second working coil to be the same as each other or different from each other.

15. The induction heating type cooktop of claim 8,
wherein the inverter includes a first inverter configured to drive the first working coil and a second inverter configured to drive the second working coil, and
wherein the controller is configured to control the direction of the electric current flowing through the first working coil by using the first inverter, and control the direction of the electric current flowing through the second working coil by using the second inverter.
